# EUROPEAN PATENT SPECIFICATION

(11) **EP 3 102 380 B1**
(45) Date of publication and mention of the grant of the patent: **19.04.2023**
(21) Application number: 15701118.0
(22) Date of filing: 15.01.2015
(51) Int. Cl.: B29L 31/00, B32B 15/04, B29K 105/04, B29K 705/00, B29C 44/12, B32B 5/20, B29K 75/00

(54) **INSULATING ASSEMBLY FOR A STORAGE VESSEL AND PROCESS FOR ITS PREPARATION**
ISOLIERANORDNUNG FÜR EINEN AUFBEWAHRUNGSBEHÄLTER UND VERFAHREN ZU DESSEN HERSTELLUNG
ENSEMBLE ISOLANT DESTINÉ À UN RÉCIPIENT DE STOCKAGE ET SON PROCÉDÉ DE PRÉPARATION

(30) Priority: 06.02.2014 EP 14154123
(43) Date of publication of application: 14.12.2016
(73) Proprietor: BASF SE, 67056 Ludwigshafen am Rhein (DE)
(72) Inventor: MOHMEYER, Nils, 68165 Mannheim (DE); ELBING, Mark, 28215 Bremen (DE); FRICKE, Bernd, 49448 Quernheim (DE)
(74) Representative: BASF IP Association
(86) International application number: PCT/EP2015/050651
(87) International publication number: WO 2015/117801

(56) References cited:
- EP-A1- 1 516 720
- EP-A1- 2 295 237
- EP-A2- 0 960 723
- US-A- 4 205 136
- US-A- 4 692 477
- US-A1- 2012 189 838

## Description

The present invention relates to a process for preparing an insulating element for a tank comprising the steps of covering at least two surfaces of a mold with a metal foil; introducing a foam forming composition in the mold; and allowing a foam to form between the metal foils. The present invention further relates to the insulating element as such, an insulating assembly for a tank comprising insulating elements which are designed to fit closely to the periphery of the tank, wherein the insulating element is obtained or obtainable according to the process of the present invention; and also the use of said insulating assembly to insulate a tank, a tank wagon or a container.

Tanks and other vessels holding or carrying materials such as solids, gases or liquids generally need to be maintained within controlled temperature limits for efficient use. One way of providing this temperature control is to provide insulation on the vessels or tanks.

Various methods are known for insulating tanks or storage vessels. In particular for mobile tanks it is important to insulate the tank to avoid temperature changes. The insulation layer may be made of a variety of different materials and may be of varying thickness. For example, rock wool, fiberglass, PIR foam or PUR foam and mixtures thereof are used for the insulation layer. In the case of vessels, the insulation material generally used is made of fibrous material such as, for example, fiberglass, since these materials can be easily adapted to the shape of the storage tank.

For example EP 0 090 334 A2 discloses mobile cryogenic storage vessels of the type having a cylindrically shaped inner storage vessel surrounded by a relatively thin outer shell and an intermediate evacuable insulation space there between. This space is filled with an insulating material.

US 1,730,153 discloses a method for insulating a double-walled tank with fibrous insulation where metallic bands having circumferentially spaced blocks (e.g. of wood) attached thereto are wrapped at selected intervals around a cylindrical inner vessel. The fibrous insulating material is then wrapped around the inner vessel.

US 4,104,783 and US 4,168,014 both describe a method for insulation and an insulation system for cryogenic transport intended as a replacement for the conventionally used perlite insulation. These patents disclose a method for, and an insulation system whereby fiber glass insulation is compressively wrapped around an inner storage container.

Fibrous materials are widely used because they can easily fill a given space. However, they have the disadvantage that they loose their insulating properties when wet, i.e. when the insulating layer comes in contact with water, it is difficult to dry this layer and a loss in insulating properties results.

As an alternative approach the use of rigid insulating materials, like polyurethane foams is suggested in the state of the art. The foam can be prepared in place, i.e. in a cavity around the tank or storage vessel. EP 1 757 426 A2 discloses a process for insulating a tank based on this method. A fluid reaction mixture is introduced in the cavity and the foam forms in place. Using this method, the viscosity of the reaction mixture as well as the foaming properties have to be chosen carefully in order to avoid voids in the resulting insulating layer.

Alternatively, the insulating material can be cut out from large blocks of rigid foam. Usually, flat boards are cut out and additional insertions have to be cut out in order to shape the insulating layer to fit to the storage tank. The preparation of an insulating element using this method is time-consuming and inefficient. Additionally, it is necessary to add a protective layer such as a foil, in particular a metal foil in order to protect the foam. This foil might be fixed to the insulating material using an adhesive layer, adding another step to the preparation process. This process for preparing insulating elements is time consuming and expensive.

For example DE 20 2011 051 521 U1 discloses a method for insulating a storage tank using several insulating elements which are placed around the vessel in order to fit closely to the shape of the vessel. This reduces gaps which reduce the insulating properties.

DE 10 2006 013 385 A1 discloses an insulating element which is cut out of a polyurethane rigid block and further insertions are added in order to allow to form the insulating element in a rounded shape to fit the shape of the storage tank. Additional protective foils are added to stabilize the element. With this method, insulating elements can be obtained which are shaped around a storage tank. However, it is difficult to adapt the shape of the element, for example vary the thickness of the insulating layer over the perimeter of the storage tank. Furthermore, insulating elements which are prepared according to the state of the art, i.e. by cutting a suitable element from a block of foam and covering the surfaces with a foil generally contain gases such as oxygen which accelerates the degradation of the insulation element when subjected to temperature changes which occurs for example when hot materials are stored in a tank. The resulting insulating elements thus have only limited temperature stability.

Documents EP 0 960 723 A2 and GB 2 418 174 A also disclose methods for preparing insulating elements.

It was therefore an object of the present invention to provide for an efficient method to prepare insulating elements for storage tanks. It was a further object of the present invention to provide insulating elements with stable insulating properties which can be adapted easily to the shape of a given storage tank or vessel. Furthermore, it was an object of the present invention to provide insulating elements which have improved temperature stability.

According to the present invention, this object is solved by a process for preparing an insulating element for a tank comprising the steps
(i) covering at least two surfaces of a mold with a metal foil;
(ii) introducing a foam forming composition in the mold;
(iii) allowing a foam to form between the metal foils,

wherein the foam comes in direct contact with the metal foil directly after the formation of the foam, and
wherein all surfaces of the insulating element are covered with a metal foil,
wherein the shape of the insulating element remains substantially intact when subjected to a temperature treatment cycle on one of the metal coated surfaces of the insulating element, the temperature treatment cycle comprising at least two sequences of heating to a temperature of 150 °C for a period of at least 12 hours and subsequent storage at 20 °C for a period of at least 12 hours.

In the process according to the present invention, a mold is used to prepare an insulating element for a tank. In this process, at least two surfaces of the mold are covered with a metal foil and subsequently, a foam forming composition is introduced in the mold. Finally, the process comprises a step of allowing a foam to form between the metal foils. According to the process of the present invention, an insulating element is obtained which has at least two surfaces which are covered with a metal foil. The metal foil is fixed to the foam due to the preparation process.

According to step (i) of the process of the present invention, two surfaces of a mold are covered with a metal foil. The reaction mixture is applied on one of the metal foils and the foam forms between the metal foils. Preferably, the mold is closed after the reaction mixture is applied. According to the present invention, the mold used in this process can be heated to a suitable temperature, for example a temperature in the range of from 20 to 60 °C, preferably a temperature in the range of from 30 to 50 °C. According to the present invention, sufficient venting has to be provided in order to improve the foam quality.

According to the present invention, the amount of reaction mixture which is applied is adapted to the volume to be filled and the reactivity of the reaction mixture.

The resulting foam has insulating properties. Preferably, the foam obtained is a rigid foam according to DIN 7726 with closed cells. More preferably, the cells are predominantly round cells. The content of closed cells is preferably greater than 90 %, determined according to DIN EN ISO 4590, more preferable in the range of from 92 to 99 %. The foam preferably has a lambda value in the range of from 18 to 35 mW/(m*K), in particular in the range of from 20 to 33 mW/(m*K), more preferably in the range of from 22 to 26 mW/(m*K), determined according to DIN EN 12667.

Furthermore, the foam might have a density in the range of from 20 to 70 kg/m³, determined according to DIN EN ISO 845, preferably in the range of from 30 to 60 kg/m³, in particular in the range of from 40 to 50 kg/m³, determined according to DIN EN ISO 845. The foam might have a compressive strength in the range of from 0.3 to 0.6 N/mm², determined according to DIN EN ISO 604, preferably in the range of from 0.35 to 0.55 N/mm², in particular in the range of from 0.4 to 0.5 N/mm², determined according to DIN EN ISO 604.

According to the process of the present invention, the foam comes in direct contact with the metal foil directly after the formation of the foam. Therefore, the cell structure of the foam remains intact, i.e. the cells are not damaged and the inclusion of gases such as oxygen can be avoided. Thus, due to the preparation process according to the present invention, no or only very little oxygen is present in the insulating element. The metal foil protects the foam structure and prevents diffusion of gases. Therefore, the insulating element obtained in the process according to the invention is very stable, in particular stable to temperature changes and shows little loss in the insulating properties when subjected to temperature changes.

It is particularly advantageous to cover the surface of the insulating element which is designed to be close to the storage tank and the surface which is to be the outer surface. Therefore, it is preferred that the two surfaces of the mold which are covered are essentially opposite surfaces of the mold. More preferably, the surface of the mold which is shaped to fit the outer surface of the storage tank is covered with a metal foil as well as the side of the mold which is essentially opposite to this surface. Even more preferred, the surface of the mold which is shaped to fit the outer surface of the storage tank is covered with a metal foil as well as the side of the mold which is essentially opposite to this surface which is shaped to be the outer side of the resulting insulating element.

According to a further embodiment, the present invention thus is directed to the process for preparing an insulating element for a tank as disclosed above, wherein the two surfaces are essentially opposite surfaces of the mold.

According to the present invention, a metal foil is used. In principle, any metal foil can be used as long as it is diffusion resistant. Particularly suitable are foils made of steel or aluminum. Suitable metal foils are aluminum foils, for example with a thickness in the range of from 20 to 200 µm, in particular in the range of from 30 to 120 µm, more preferred in the range of from 40 to 80 µm.

According to a further embodiment, the present invention is directed to the process for preparing an insulating element for a tank as disclosed above, wherein the metal foil has a thickness in the range of from 20 to 200 µm.

According to a further embodiment, the metal foil is coated with a protective layer. It has been found advantageous to avoid direct contact between the metal foil and the metal surface of a tank in order to avoid unwanted reactions of the metals. The protective layer may be any suitable layer which avoids direct contact of the metal foil with another metal, for example a laquer coat.

According to the present invention it is also possible, that further surfaces of the insulating element are covered with a foil, in particular a metal foil. This foil can be introduced in the preparation step before the foam forming composition is added. Alternatively, the additional foil can be fixed to the insulating element after the steps (i) to (iii) have been carried out, for example using an additional adhesive layer. This additional foil might be a foil which prevents diffusion. In general, any suitable foil might be used. Preferably, the metal foil as disclosed above is used.

According to the present invention, all surfaces of the insulating element are covered with a foil. More preferred, all surfaces of the insulating element are covered with a metal foil.

In general, any suitable foam forming composition or any resulting foam may be used according to the present invention as long as it has suitable insulating properties.

In particular, polyurethane foams are suitable for the insulating elements, more preferred rigid polyurethane foam. The foam forming composition used in the process according to the present invention thus preferably is a composition which is suitable to prepare a polyurethane foam, more preferred a rigid polyurethane foam. According to a further embodiment of the present invention, the foam forming composition used in the process according to the present invention is a composition which is suitable to prepare a rigid polyurethane foam with a lambda value in the range of from 18 to 35 mW/(m*K), in particular in the range of from 20 to 33 mW/(m*K), more preferably in the range of from 22 to 26 mW/(m*K).

According to a further embodiment, the present invention is directed to the process for preparing an insulating element for a tank as disclosed above, wherein the foam is a polyurethane rigid foam.

Polyurethanes have been known for a long time and are widely described in the literature. They are usually produced by reacting polyisocyanates with compounds having at least two hydrogen atoms which are reactive toward isocyanate groups in the presence of blowing agents, at least one catalyst and auxiliaries and/or additives. Thus, the foam forming composition preferably comprises one or more polyisocyanates, one or more compounds having at least two hydrogen atoms which are reactive toward isocyanate groups, one or more blowing agents, at least one catalyst and optionally auxiliaries and/or additives.

The compounds having at least two hydrogen atoms which are reactive toward isocyanate groups are in most cases polyfunctional alcohols. Apart from polyester alcohols, polyether alcohols have the greatest industrial importance here.

The polyether alcohols are usually prepared by addition of alkylene oxides, preferably ethylene oxide and/or propylene oxide, onto polyfunctional alcohols and/or amines. The addition reaction is usually carried out in the presence of catalysts.

All these processes are known to those skilled in the art. A summary overview of the production of PUR foams has been, for example, published in Polyurethane, Kunststoff-Handbuch, volume 7, 1st edition 1966, edited by Dr. R. Vieweg and Dr. A. Höchtlen, and 2nd edition 1983, edited by Dr. Gunter Oertel, Carl Hanser Verlag, Munich, Vienna.

As has been mentioned above, the PUR foams are produced by the process of the invention using the formative components known per se, about which the following details may be provided:

As organic isocyanates, it is possible to use all usual aliphatic, cycloaliphatic and preferably aromatic diisocyanates and/or polyisocyanates. As preferred isocyanates, it is possible to use toluylene diisocyanate (TDI) and/or diphenylmethane diisocyanate (MDI), preferably MDI, and particularly preferably mixtures of MDI and polymeric diphenylmethane diisocyanate (PMDI). These particularly preferred isocyanates can have been modified fully or partially with uretdione, carbamate, isocyanurate, carbodiimide or allophanate groups.

Furthermore, prepolymers and mixtures of the above-described isocyanates and prepolymers can be used as isocyanate component. These prepolymers are prepared from the above-described isocyanates and the polyethers, polyesters or both described below and have an NCO content of usually from 14 to 32 % by weight, preferably from 22 to 30 % by weight.

As relatively high molecular weight compounds having groups which are reactive toward isocyanates, it is possible to use all compounds which have at least two groups which are reactive toward isocyanates, e.g. OH-, SH-, NH- and CH-acid groups. It is usual to use polyetherols and/or polyesterols having from 2 to 8, preferably from 2 to 6, hydrogen atoms which are reactive toward isocyanate. The OH number of these compounds is usually in the range from 30 to 850 mg KOH/g, preferably in the range from 100 to 500 mg KOH/g.

The polyetherols are obtained by known methods, for example by anionic polymerization of alkylene oxides with addition of at least one starter molecule comprising from 2 to 8, preferably from 2 to 6, reactive hydrogen atoms in bound form in the presence of catalysts. As catalysts, it is possible to use alkali metal hydroxides such as sodium hydroxide or potassium hydroxide or alkali metal alkoxides such as sodium methoxide, sodium or potassium ethoxide or potassium isopropoxide, or in the case of cationic polymerization Lewis acids such as antimony pentachloride, boron trifluoride etherate or bleaching earth as catalysts. Furthermore, double metal cyanide compounds, known as DMC catalysts, can also be used as catalysts. Furthermore, polyetherols can be prepared using amines as catalyst as for example disclosed in WO 2011/134866 or WO 2011/134856 A1.

Preference is given to using one or more compounds having from 2 to 4 carbon atoms in the alkylene radical, e.g. ethylene oxide, 1,2-propylene oxide, tetrahydrofuran, 1,3-propylene oxide, 1,2- or 2,3-butylene oxide, in each case either alone or in the form of mixtures, particularly preferably ethylene oxide and/or 1,2-propylene oxide, as alkylene oxides.

Possible starter molecules are, for example, ethylene glycol, diethylene glycol, glycerol, trimethylolpropane, pentaerythritol, sugar derivatives such as sucrose, hexitol derivatives such as sorbitol, also methylamine, ethylamine, isopropylamine, butylamine, benzylamine, aniline, toluidine, toluenediamine, in particular vicinal toluenediamine, naphthylamine, ethylenediamine, diethylenetriamine, 4,4'-methylenedianiline, 1,3,-propanediamine, 1,6-hexanediamine, ethanolamine, diethanolamine, triethanolamine and other dihydric or polyhydric alcohols or monofunctional or polyfunctional amines. Preference is given to ethylene glycol, diethylene glycol, glycerol, trimethylolpropane, pentaerythritol, sugar derivatives such as sucrose and hexitol derivatives such as sorbitol and TDA, preferably vic-TDA.

The polyester alcohols used are usually prepared by condensation of polyfunctional alcohols having from 2 to 12 carbon atoms, e.g. ethylene glycol, diethylene glycol, butanediol, trimethylolpropane, glycerol or pentaerythritol, with polyfunctional carboxylic acids having from 2 to 12 carbon atoms, for example succinic acid, glutaric acid, adipic acid, suberic acid, azelaic acid, sebacic acid, decanedicarboxylic acid, maleic acid, fumaric acid, phthalic acid, isophthalic acid, terephthalic acid, the isomers of naphthalenedicarboxylic acids or the anhydrides of the acids mentioned.

As further starting materials in the preparation of the polyesters, it is also possible to make concomitant use of hydrophobic materials. The hydrophobic materials are water-insoluble materials which comprise a nonpolar organic radical and have at least one reactive group selected from among hydroxyl, carboxylic acid, carboxylic ester or mixtures thereof. The equivalent weight of the hydrophobic materials is preferably in the range from 130 to 1000 g/mol. It is possible to use, for example, fatty acids such as stearic acid, oleic acid, palmitic acid, lauric acid or linoleic acid and also fats and oils such as castor oil, maize oil, sunflower oil, soybean oil, coconut oil, olive oil or tall oil.

The polyesterols used preferably have a functionality of from 1.5 to 5, particularly preferably from 1.8 to 3.5.

If isocyanate prepolymers are used as isocyanates, the content of compounds having groups which are reactive toward isocyanates is calculated with inclusion of the compounds having groups which are reactive toward isocyanates used for preparing the isocyanate prepolymers.

As blowing agent, generally chemical blowing agents such as water and formic acid can be used but also physical blowing agents such as hydrocarbons, particularly pentanes, especially cyclopentane. According to the present invention, typically water is used as a chemical blowing agent. Water can be used either alone or in combination with further blowing agents. The content of water in the blowing agent is preferably greater than 40 % by weight, particularly preferably greater than 60 % by weight and very particularly preferably greater than 80 % by weight, based on the total weight of the blowing agent. In particular, water is used as sole blowing agent. If further blowing agents apart from water are used, it is possible to use physical blowing agents, for example, chlorofluorocarbons, saturated and unsaturated fluorinated hydrocarbons, hydrocarbons, acids and/or liquid or dissolved carbon dioxide. Unsaturated fluorinated hydrocarbons are also referred to as HFOs, or hydrofluoroolefin.

The water content, based on the total weight of the components, is from 0.05 to 6 % by weight, particularly preferably from 0.1 to 5 % by weight.

As catalysts, it is possible to use all compounds which accelerate the isocyanate-water reaction or the isocyanate-polyol reaction. Such compounds are known and are described, for example, in "Kunststoffhandbuch, volume 7, Polyurethane", Carl Hanser Verlag, 3rd edition 1993, chapter 3.4.1. These include amine-based catalysts and catalysts based on organic metal compounds.

As catalysts based on organic metal compounds, it is possible to use, for example, organic tin compounds such as tin(II) salts of organic carboxylic acids, e.g. tin(II) acetate, tin(ll) octoate, tin(ll) ethylhexanoate and tin(ll) laurate, and the dialkyltin(IV) salts of organic carboxylic acids, e.g. dibutyltin diacetate, dibutyltin dilaurate, dibutyltin maleate and dioctyltin diacetate, and also bismuth carboxylates such as bismuth(III) neodecanoate, bismuth 2-ethylhexanoate and bismuth octanoate or alkali metal salts of carboxylic acids, e.g. potassium acetate or potassium formate.

Preference is given to using a mixture comprising at least one tertiary amine as catalyst. These tertiary amines may also bear groups which are reactive toward isocyanate, e.g. OH, NH or NH2 groups. Some of the most frequently used catalysts are bis(2-dimethylaminoethyl) ether, N,N,N,N,N-pentamethyldiethylenetriamine, N,N,N-triethylaminoethoxyethanol, dimethylcyclohexylamine, dimethylbenzylamine, triethylamine, triethylenediamine, pentamethyldipropylenetriamine, dimethylethanolamine, N-methylimidazole, N-ethylimidazole, tetramethylhexamethylenediamine, tris(dimethylaminopropyl)hexahydrotriazine, dimethylaminopropylamine, Nethylmorpholine, diazabicycloundecene and diazabicyclononene. Preference is given to using mixtures comprising at least two different tertiary amines as catalysts.

Foam stabilizers are materials which promote formation of a regular cell structure during foaming. Examples are: silicone-comprising foam stabilizers such as siloxaneoxalkylene copolymers and other organopolysiloxanes. Also alkoxylation products of fatty alcohols, oxo alcohols, fatty amines, alkylphenols, dialkylphenols, alkylcresoles, alkylresorcinol, naphthol, alkylnaphthol, naphthylamine, aniline, alkylaniline, toluidine, bisphenol A, alkylated bisphenol A, polyvinyl alcohol and also alkoxylation products of condensation products of formaldehyde and alkylphenols, formaldehyde and dialkylphenols, formaldehyde and alkylcresoles, formaldehyde and alkylresorcinol, formaldehyde and aniline, formaldehyde and toluidine, formaldehyde and naphthol, formaldehyde and alkylnaphthol and also formaldehyde and bisphenol A or mixtures of two or more of these foam stabilizers.

Foam stabilizers are preferably used in an amount of from 0.5 to 5 % by weight, particularly preferably from 1 to 3 % by weight, based on the total weight of the components.

As further additives, it is possible to use fillers and other additives such as antioxidants.

The foam forming composition, for example the liquid PUR reaction mixture is introduced into the mold according to step (ii) of the process of the present invention and in step (iii) the foam forms. After sufficient curing of the foam, preferably the PUR foam, the insulating element produced by the process of the invention is taken out of the mold. Usually the demold time increases with increasing thickness of the element, for example in the case of water blown insulation elements with densities between 35 g/l to 50 g/l with 50 mm thickness usually demold times between 5 to 15 min are observed and insulation elements with 200 mmm thickness have demold times of greater than 30 min.

According to a further embodiment, the present invention is directed to the process for preparing an insulating element for a tank as disclosed above, wherein the shape of the mold is selected to result in an insulating element fitting to the shape of the tank.

Preferably, the edges of the insulating element according to the present invention are shaped to overlap with the next insulating element, i.e. the edges might be tapered or shaped in another suitable way. This design avoids gaps between the insulating elements and allows to adjust the assembly of insulating elements to slight changes in the diameter of the tank which might occur due to temperature changes.

According to the present invention, the insulating element can have any suitable shape which is suitable to fit closely to the storage tank. It is preferred to use a mold which is especially designed to produce an insulating element for a given storage tank. The storage tank can be covered by any number of insulating elements, as long as the surface of the storage tank is covered by insulating elements and the gaps between the insulating elements are small in order to avoid thermal bridges.

According to a further aspect, the present invention is directed to an insulating element obtained or obtainable according to a process as disclosed above. Preferred embodiments are disclosed with respect to the process.

It has been found that with the process according to the present invention, insulating elements may be obtained which are surprisingly stable when subjected to repeated heating and cooling which might occur when hot substances are stored in a tank. Preferably, the insulating element according to the present invention comprises a core of a rigid polyurethane foam which is covered with metal foils. Due to the preparation process, the metal foils and the foam have a high adhesive strength, for example in the range of from 0.1 N/mm² to 0.4 N/mm², determined according to DIN 53292.

According to a further embodiment, the present invention is directed to an insulating element comprising a metal foil and a shaped element consisting of a polyurethane rigid foam, wherein at least two surfaces of the shaped element are covered with a metal foil and wherein the adhesive strength between the metal foil and the polyurethane rigid foam is in the range of from 0.1 N/mm² to 0.4 N/mm², determined according to DIN 53292.

The shape of the insulating element according to the present invention remains substantially intact when subjected to a temperature treatment cycle on one of the metal coated surfaces of the insulating element, the temperature treatment cycle comprising at least two sequences of heating to a temperature of 150 °C for a period of at least 12 hours and subsequent storage at 20 °C for a period of at least 12 hours. In the context of the present invention, "substantially intact" means that the shape, i.e. the height, the width and/or the length of a given element only changes by 2 %, preferably only by 1 %.

The temperature cycle is repeated at least twice, for example over a period of 2 to 100 days, preferably for at least 50 days, in particular for at least 70 days, more preferably for at least 90 days. Thus, the temperature cycle is preferably repeated at least 50 times, in particular at least 70 times, more preferably at least 90 times and the shape of the insulating element remains substantially intact.

According to a further element, the present invention is directed to an insulating element as disclosed above, wherein the shape of the insulating element remains intact when subjected to a temperature treatment cycle on one of the metal coated surfaces of the insulating element, the temperature treatment cycle comprising at least two sequences of heating to a temperature of 150 °C for a period of at least 12 hours and subsequent storage at 20 °C for a period of at least 12 hours.

According to a further aspect, the present invention is directed to an insulating assembly for a tank comprising insulating elements which are designed to fit closely to the periphery of the tank, wherein the insulating element is obtained or obtainable according to a process as disclosed above.

According to the present invention, the insulating assembly can comprise one or more insulating elements according to the present invention. Depending on the size and shape of the storage tank, the size and number of insulating elements may vary. For example for a mobile storage vessel, the insulating assembly preferably comprises from 2 to 6 elements whereas the insulating assembly for a large storage tank, for example for biogas may comprise a multitude of insulating elements.

The size and shape of the insulating elements may vary within an insulating assembly. Preferably the shape of the individual insulating elements is essentially identical and each insulating element can be prepared using the same mold.

According to the present invention, in addition to one or more insulating elements according to the present invention, an insulating assembly may also comprise insulating elements which are prepared using other methods as long as thermal bridges are avoided.

Thus, the present invention is directed to an insulating assembly for a tank comprising insulating elements which are designed to fit closely to the periphery of the tank, wherein the insulating element is obtained according to a process comprising the steps
(i) covering at least two surfaces of a mold with a metal foil;
(ii) introducing a foam forming composition in the mold;
(iii) allowing a foam to form between the metal foils,

wherein the foam comes in direct contact with the metal foil directly after the formation of the foam, and
wherein all surfaces of the insulating element are covered with a metal foil,
wherein the shape of the insulating element remains substantially intact when subjected to a temperature treatment cycle on one of the metal coated surfaces of the insulating element, the temperature treatment cycle comprising at least two sequences of heating to a temperature of 150 °C for a period of at least 12 hours and subsequent storage at 20 °C for a period of at least 12 hours.

Each mold is designed in order to obtain insulating elements which fit to the storage vessel.

According to the present invention, the mold is used to prepare an insulating element for a tank. In this process, at least two surfaces of the mold are covered with a metal foil and subsequently, a foam forming composition is introduced in the mold. Finally, the process comprises a step of allowing a foam to form between the metal foils. According to the present invention, the insulating element has at least two surfaces which are covered with a metal foil. The metal foil is fixed to the foam due to the process.

According to the present invention, the insulating assembly can be shaped to fit the shape of the storage tank, thus avoiding gaps and resulting in good insulation of the storage tank.

Preferred embodiments of the insulating elements are disclosed above. Therefore, according to a further embodiment, the present invention is directed to an insulating assembly for a tank as disclosed above, wherein at least one insulating element comprises
- a polyurethane rigid foam,
- a metal foil covering the surface of the polyurethane rigid foam which is to face the tank, and
- a metal foil covering the surface of the polyurethane rigid foam which is to be the far side from the tank.

According to a preferred embodiment, the present invention is also directed to an insulating assembly for a tank as disclosed above, wherein the metal foil has a thickness in the range of from 20 to 200 µm.

According to yet a further embodiment, the present invention is directed to an insulating assembly for a tank as disclosed above, wherein the adhesive strength between the metal foil and the polyurethane rigid foam is in the range of from 0.1 N/mm² to 0.4 N/mm², determined according to DIN 53292.

According to a further aspect, the present invention is directed to the use of an insulating assembly comprising insulating elements obtained or obtainable according to a process as disclosed above or an insulating assembly as disclosed above to insulate a tank, a tank wagon or a container.

Examples will be used below to illustrate the invention.

### EXAMPLES

### 1. Production of molded foam samples

### 1.1 Insulating element according to the invention:

A diffusion-tight metal foil was placed inside a mold having dimensions of 400 mm x 300 mm x 80 mm on the bottom. A second metal foil was fixed at the inside of the lid of the mold. Then a formulated polyol component was mixed with the isocyanate component (e.g. Lupranate M20) required to achieve an isocyanate index of 120 by means of a highpressure foaming machine (e.g. Puromat^{®} PU 30/80 IQ, Elastogran GmbH) at a discharge rate of 250 g/sec. In total 432 g of the reaction mixture were injected into above mold, while the mold temperature was kept at 40 °C. The lid of the mold was closed and the reaction mixture allowed to foam between the two metal foils. An easy removal of air has to be ensured. After a demold time of 15 min the insulation element was removed and the temperature stability was investigated as described below.

Details of the prepared insulation element are summarized in table 1 below.

### 1.2 Comparative example 1

An insulating element was prepared according to the procedure of example 1.1 with the difference that paper was used instead of metal foil.

### 1.3 Comparative example 2

An insulating element was prepared according to the procedure of example 1.1 with the difference that the element was prepared without additional facing material. In this case the mold has to be prepared using release agent.

**Table 1**

| | | According to the invention | Comparative 1 | Comparative 2 |
|---|---|---|---|---|
| **Overall density** | [in kg/m³] | 45 | 45 | 45 |
| **Start time** | [in s] | 15 | 15 | 15 |
| **Gel time** | [in s] | 57 | 57 | 57 |
| **Compressive strength before temperature cycle** | [in N/mm²] | 0.28 | 0.28 | 0.28 |
| **Shrinkage** | [in %] | 1 | 15 | 20 |
| **Discoloring** | - | none | brown | brown |
| **Compressive strength after T cycle** | [in N/mm²] | 0.28 | 0.14 | 0.12 |

### 2. Details of temperature cycle

In order to evaluate the stability of the insulating elements, they were subjected to a temperature cycle.

For this purpose, the insulating element to be tested is placed on a heating plate and subjected to cycles of heating and cooling on one of the metal coated surfaces of the insulating element. The temperature cycle comprises at least 90 sequences of heating to a temperature of 150 °C for a period of at least 12 hours and subsequent storage at 20 °C for a period of at least 12 hours. The samples according to examples 1.1 to 1.3 were subjected to the temperature cycle for 90 days. Shrinkage after the temperature cycle was measured as well as the change in compressive strength and change in color. The results are summarized in table 1.

## Claims

1. A process for preparing an insulating element for a tank comprising the steps
(i) covering at least two surfaces of a mold with a metal foil;
(ii) introducing a foam forming composition in the mold;
(iii) allowing a foam to form between the metal foils,
wherein the foam comes in direct contact with the metal foil directly after the formation of the foam, and
wherein all surfaces of the insulating element are covered with a metal foil,
wherein the shape of the insulating element remains substantially intact when subjected to a temperature treatment cycle on one of the metal coated surfaces of the insulating element, the temperature treatment cycle comprising at least two sequences of heating to a temperature of 150 °C for a period of at least 12 hours and subsequent storage at 20 °C for a period of at least 12 hours.

2. The process for preparing an insulating element for a tank according to claim 1, wherein the two surfaces are essentially opposite surfaces of the mold.

3. The process for preparing an insulating element for a tank according to claim 1 or 2,
wherein the metal foil has a thickness in the range of from 20 to 200 µm.

4. The process for preparing an insulating element for a tank according to any of claims 1 to 3, wherein the foam is a polyurethane rigid foam.

5. The process for preparing an insulating element for a tank according to any of claims 1 to 4, wherein the shape of the mold is selected to result in an insulating element fitting to the shape of the tank.

6. An insulating element obtained according to a process according to any of claims 1 to 5,
wherein the shape of the insulating element remains substantially intact when subjected to a temperature treatment cycle on one of the metal coated surfaces of the insulating element, the temperature treatment cycle comprising at least two sequences of heating to a temperature of 150 °C for a period of at least 12 hours and subsequent storage at 20 °C for a period of at least 12 hours.

7. An insulating element according to claim 6 comprising a metal foil and a shaped element consisting of a polyurethane rigid foam, wherein at least two surfaces of the shaped element are covered with a metal foil and wherein the adhesive strength between the metal foil and the polyurethane rigid foam is in the range of from 0.1 N/mm² to 0.4 N/mm², determined according to DIN 53292.

8. An insulating assembly for a tank comprising insulating elements which are designed to fit closely to the periphery of the tank, wherein at least one insulating element is obtained according to a process according to any of claims 1 to 5 or wherein the insulating assembly comprises an insulating element according to any of claims 6 to 7.

9. An insulating assembly for a tank according to claim 8, wherein the insulating element comprises
- a polyurethane rigid foam,
- a metal foil covering the surface of the polyurethane rigid foam which is to face the tank, and
- a metal foil covering the surface of the polyurethane rigid foam which is to be the far side from the tank.

10. An insulating assembly for a tank according to claim 8 or 9, wherein the metal foil has a thickness in the range of from 20 to 200 µm.

11. An insulating assembly for a tank according to any of claims 8 to 10, wherein the adhesive strength between the metal foil and the polyurethane rigid foam is in the range of from 0.1 N/mm² to 0.4 N/mm², determined according to DIN 53292.

12. Use of an insulating assembly comprising insulating elements obtained or obtainable according to a process according to any of claims 1 to 5 or insulating elements according to any of claims 6 to 7 or an insulating assembly according to any of claims 8 to 11 to insulate a tank, a tank wagon or a container.

## Patentansprüche

1. Verfahren zur Herstellung eines Isolierelements für einen Tank, umfassend die Schritte
(i) Bedecken von wenigstens zwei Oberflächen eines Formwerkzeugs mit einer Metallfolie;
(ii) Einführen einer schaumbildenden Zusammensetzung in das Formwerkzeug;
(iii) Erlauben, dass zwischen den Metallfolien ein Schaumstoff gebildet wird,
wobei der Schaumstoff direkt nach dem Bilden des Schaumstoffs in direkten Kontakt mit der Metallfolie kommt, und
wobei alle Oberflächen des Isolierelements mit einer Metallfolie bedeckt sind,
wobei die Form des Isolierelements bei Unterwerfen an einen Temperaturbehandlungszyklus an einer der metallbeschichteten Oberflächen des Isolierelements im Wesentlichen erhalten bleibt, wobei der Temperaturbehandlungszyklus wenigstens zwei Abfolgen von Erhitzen auf eine Temperatur von 150 °C für einen Zeitraum von wenigstens 12 Stunden und anschließendem Lagern bei 20 °C für einen Zeitraum von wenigstens 12 Stunden umfasst.

2. Verfahren zur Herstellung eines Isolierelements für einen Tank gemäß Anspruch 1, wobei die beiden Oberflächen im Wesentlichen gegenüberliegende Oberflächen des Formwerkzeugs sind.

3. Verfahren zur Herstellung eines Isolierelements für einen Tank gemäß Anspruch 1 oder 2, wobei die Metallfolie eine Dicke in dem Bereich von 20 bis 200 µm aufweist.

4. Verfahren zur Herstellung eines Isolierelements für einen Tank gemäß einem der Ansprüche 1 bis 3, wobei der Schaumstoff ein Polyurethanhartschaumstoff ist.

5. Verfahren zur Herstellung eines Isolierelements für einen Tank gemäß einem der Ansprüche 1 bis 4, wobei die Form des Formwerkzeugs ausgewählt ist, um ein Isolierelement zu liefern, das zu der Form des Tanks passt.

6. Isolierelement, erhalten gemäß einem Verfahren gemäß einem der Ansprüche 1 bis 5,
wobei die Form des Isolierelements bei Unterwerfen an einen Temperaturbehandlungszyklus an einer der metallbeschichteten Oberflächen des Isolierelements im Wesentlichen erhalten bleibt, wobei der Temperaturbehandlungszyklus wenigstens zwei Abfolgen von Erhitzen auf eine Temperatur von 150 °C für einen Zeitraum von wenigstens 12 Stunden und anschließendem Lagern bei 20 °C für einen Zeitraum von wenigstens 12 Stunden umfasst.

7. Isolierelement gemäß Anspruch 6, umfassend eine Metallfolie und ein geformtes Element, das aus einem Polyurethanhartschaumstoff besteht, wobei wenigstens zwei Oberflächen des geformten Elements von einer Metallfolie bedeckt sind und wobei die Haftfestigkeit zwischen der Metallfolie und dem starren Polyurethanschaumstoff in dem Bereich von 0,1 N/mm² bis 0,4 N/mm², bestimmt gemäß DIN 53292, liegt.

8. Isolierbaugruppe für einen Tank, umfassend Isolierelemente, die dafür ausgelegt sind, eng an den Umfang des Tanks zu passen, wobei wenigstens ein Isolierelement gemäß einem Verfahren gemäß einem der Ansprüche 1 bis 5 erhalten ist, oder wobei die Isolierbaugruppe ein Isolierelement gemäß einem der Ansprüche 6 bis 7 umfasst.

9. Isolierbaugruppe für einen Tank gemäß Anspruch 8, wobei das Isolierelement umfasst:
- einen Polyurethanhartschaumstoff,
- eine Metallfolie, die die Oberfläche des Polyurethanhartschaumstoffs, die zu dem Tank zeigen soll, bedeckt, und
- eine Metallfolie, die die Oberfläche des starren Polyurethanschaumstoffs, die die von dem Tank entfernte Seite sein soll, bedeckt.

10. Isolierbaugruppe für einen Tank gemäß Anspruch 8 oder 9, wobei die Metallfolie eine Dicke in dem Bereich von 20 bis 200 µm aufweist.

11. Isolierbaugruppe für einen Tank gemäß einem der Ansprüche 8 bis 10, wobei die Haftfestigkeit zwischen der Metallfolie und dem Polyurethanhartschaumstoff in dem Bereich von 0,1 N/mm² bis 0,4 N/mm², bestimmt gemäß DIN 53292, liegt.

12. Verwendung einer Isolierbaugruppe, die Isolierelemente, die gemäß einem Verfahren gemäß einem der Ansprüche 1 bis 5 erhalten oder erhältlich sind, oder Isolierelemente gemäß einem der Ansprüche 6 bis 7 oder eine Isolierbaugruppe gemäß einem der Ansprüche 8 bis 11 umfasst, zum Isolieren eines Tanks, eines Tankwagens oder eines Behälters.

## Revendications

1. Procédé pour la préparation d'un élément isolant pour une cuve comprenant les étapes
(i) couverture d'au moins deux surfaces d'un moule avec une feuille métallique ;
(ii) introduction d'une composition de formation de mousse dans le moule ;
(iii) le fait de laisser une mousse se former entre les feuilles métalliques,
la mousse entrant en contact direct avec la feuille métallique directement après la formation de la mousse, et
toutes les surfaces de l'élément isolant étant couvertes par une feuille métallique,
la forme de l'élément isolant restant sensiblement intacte lorsqu'il est soumis à un cycle de traitement en température sur l'une des surfaces revêtues de métal de l'élément isolant, le cycle de traitement en température comprenant au moins deux séquences de chauffage jusqu'à une température de 150 °C pendant une période d'au moins 12 heures et un stockage subséquent à 20 °C pendant une période d'au moins 12 heures.

2. Procédé pour la préparation d'un élément isolant pour une cuve selon la revendication 1, les deux surfaces étant des surfaces du moule essentiellement opposées.

3. Procédé pour la préparation d'un élément isolant pour une cuve selon la revendication 1 ou 2, la feuille métallique possédant une épaisseur dans la plage allant de 20 à 200 µm.

4. Procédé pour la préparation d'un élément isolant pour une cuve selon l'une quelconque des revendications 1 à 3, la mousse étant une mousse rigide de polyuréthane.

5. Procédé pour la préparation d'un élément isolant pour une cuve selon l'une quelconque des revendications 1 à 4, la forme du moule étant choisie pour résulter en un élément isolant adapté à la forme de la cuve.

6. Élément isolant obtenu selon un procédé selon l'une quelconque des revendications 1 à 5, la forme de l'élément isolant restant sensiblement intacte lorsqu'il est soumis à un cycle de traitement en température sur l'une des surfaces revêtues de métal de l'élément isolant, le cycle de traitement en température comprenant au moins deux séquences de chauffage jusqu'à une température de 150 °C pendant une période d'au moins 12 heures et un stockage subséquent à 20 °C pendant une période d'au moins 12 heures.

7. Élément isolant selon la revendication 6 comprenant une feuille métallique et un élément façonné constitué d'une mousse rigide de polyuréthane, au moins deux surfaces de l'élément façonné étant couvertes avec une feuille métallique et la force d'adhérence entre la feuille métallique et la mousse rigide de polyuréthane étant dans la plage allant de 0,1 N/mm² à 0,4 N/mm², déterminée selon la norme DIN 53292.

8. Ensemble isolant pour une cuve comprenant des éléments isolants qui sont conçus pour s'adapter intimement à la périphérie de la cuve, au moins un élément isolant étant obtenu selon un procédé selon l'une quelconque des revendications 1 à 5 ou, l'ensemble isolant comprenant un élément isolant selon l'une quelconque des revendications 6 à 7.

9. Ensemble isolant pour une cuve selon la revendication 8, l'élément isolant comprenant
- une mousse rigide de polyuréthane,
- une feuille métallique couvrant la surface de la mousse rigide de polyuréthane qui doit faire face à la cuve, et
- une feuille métallique couvrant la surface de la mousse rigide de polyuréthane qui doit être l'autre côté de la cuve.

10. Ensemble isolant pour une cuve selon la revendication 8 ou 9, la feuille métallique possédant une épaisseur dans la plage allant de 20 à 200 µm.

11. Ensemble isolant pour une cuve selon l'une quelconque des revendications 8 à 10, la force d'adhérence entre la feuille métallique et la mousse rigide de polyuréthane étant dans la plage allant de 0,1 N/mm² à 0,4 N/mm², déterminée selon la norme DIN 53292.

12. Utilisation d'un ensemble isolant comprenant des éléments isolants obtenus ou pouvant être obtenus selon un procédé selon l'une quelconque des revendications 1 à 5 ou des éléments isolants selon l'une quelconque des revendications 6 à 7 ou un ensemble isolant selon l'une quelconque des revendications 8 à 11 pour isoler une cuve, un wagon-citerne ou un récipient.
